(19) Europäisches Patentamt
European Patent Office
Office européen des brevets

(11) **EP 0 854 633 B1**

(12) **EUROPEAN PATENT SPECIFICATION**

(45) Date of publication and mention
of the grant of the patent:
**14.11.2007 Bulletin 2007/46**

(51) Int Cl.:
*H04N 1/32* (2006.01)

(21) Application number: **98100636.4**

(22) Date of filing: **15.01.1998**

(54) **Image data illegal use inhibition system**

System zur Unterdrückung der illegalen Benutzung von Bilddaten

Système de inhibition de l'utilisation illicite de données d'image

(84) Designated Contracting States:
**DE FR GB NL**

(30) Priority: **17.01.1997 JP 594197**
**17.02.1997 JP 3154597**

(43) Date of publication of application:
**22.07.1998 Bulletin 1998/30**

(60) Divisional application:
**03021964.6 / 1 381 217**

(73) Proprietor: **NEC CORPORATION**
**Tokyo (JP)**

(72) Inventors:
• **Ishino, Toshiyuki**
**Minato-ku,**
**Tokyo (JP)**
• **Sato, Shinobu**
**Minato-ku,**
**Tokyo (JP)**

(74) Representative: **Pätzold, Herbert**
**Steubstrasse 10**
**82166 Gräfelfing (DE)**

(56) References cited:
**EP-A- 0 651 554**      **WO-A-96/36163**

• **"INFORMATION HIDING IN TEXT IMAGES"
RESEARCH DISCLOSURE,GB,INDUSTRIAL
OPPORTUNITIES LTD. HAVANT, no. 389, page
539-540 XP000635465 ISSN: 0374-4353**
• **BOLAND F M ET AL: "WATERMARKING DIGITAL
IMAGES FOR COPYRIGHT PROTECTION"
INTERNATIONAL CONFERENCE ON IMAGE
PROCESSING AND ITS APPLICATIONS,GB,
LONDON, page 326-330 XP000603824**
• **PATENT ABSTRACTS OF JAPAN vol. 1996, no.
07, 31 July 1996 (1996-07-31) & JP 08 069419 A
(SHIMADZU CORP), 12 March 1996 (1996-03-12)**
• **KOMATSU N ET AL: "A PROPOSAL ON DIGITAL
WATERMARK IN DOCUMENT IMAGE
COMMUNICATION AND ITS APPLICATION TO
REALIZING A SIGNATURE" ELECTRONICS &
COMMUNICATIONS IN JAPAN, PART I -
COMMUNICATIONS,US,SCRIPTA TECHNICA.
NEW YORK, vol. 73, no. 5, PART 01, page 22-33
XP000159282 ISSN: 8756-6621**

Printed by Jouve, 75001 PARIS (FR)

**Description**

This invention relates to digital image processing, and more particularly to a system for preventing illegal use of digital image data.

2. Description of the Preferred Embodiment

In recent years, illegal duplication of a digital image has become a problem.

In order to prevent illegal duplication, a system has been proposed wherein digital image data are ciphered such that only a reproduction system having a legal decipherment key can reproduce the ciphered digital image data. However, once the cipher is deciphered, later duplication cannot be prevented.

Thus, a system wherein a unique identification code is recorded on a recording medium to indicate permission or inhibition of duplication (refer to Japanese Patent Laid-Open Application No. Heisei 8-69419), another system wherein decoders for subscription television broadcasting have different identification codes from one another recorded therein such that only those decoders which have contracted identification codes can effect correct decoding (refer to Japanese Patent Laid-Open Application No. Heisei 5-260468) and so forth have been proposed.

Further, in order to prevent illegal use and duplication of a digital image, also a method has been proposed wherein special information, that is, electronic watermark data, is embedded into the digital image itself. As such electronic watermark data for a digital image as described above, two kinds of electronic watermark data of visible electronic watermark data and invisible electronic watermark data are available.

The visible electronic watermark data are used such that a special character or symbol or the like is combined with an image so that it may be visually recognized. While the visible electronic watermark data deteriorate the picture quality, they have an effect of visually appealing to a user of a digital image for prevention of illegal use of the digital image.

An example of embedding of visible electronic watermark data is disclosed in Japanese Patent Laid-Open Application No. Heisei 8-241403. According to the method disclosed in the document just mentioned, when visible electronic watermark data are combined with an original image, only the brightness components of those pixels which correspond to opaque ones of the electronic watermark data are varied while color components of the pixels are not varied. In this instance, the scaling factor by which the brightness components of pixels are varied is determined based on color components, random numbers, values of pixels of the electronic watermark data and so forth.

On the other hand, the invisible electronic watermark data are electronic watermark data embedded in an image so that the picture quality may not be deteriorated. Since the invisible electronic watermark data little deteriorate the picture quality, they are characterized in that they cannot be recognized visually.

However, if special information which allows identification of an author is embedded as the electronic watermark data, then even after illegal duplication is performed, the author can be specified by detecting the electronic watermark data. On the other hand, if duplication inhibition information is embedded, then, for example, when a reproduction apparatus detects the duplication inhibition information, it is possible to notify the user that duplication of the data is inhibited or to render a duplication prevention mechanism in the reproduction apparatus operative to limit duplication of the data by a video tape recorder (VTR) or the like.

One of available methods of embedding invisible electronic watermark data into a digital image is to embed special information as electronic watermark data into a portion of pixel data such as the LSB (least significant bit) which has a comparatively little influence on the picture quality. In other words, this method can be regarded as a method which inserts electronic watermark data into a waveform with respect to time of an image signal. However, where this method is applied, electronic watermark data can be removed readily from an image. For example, if a low-pass filter is used, then information of the LSB of a pixel is lost. Further, electronic watermark data are lost also by image compression processing since the image compression processing reduces the data amount by removing information at such a portion which has a comparatively little influence on the picture quality as mentioned above. Consequently, the method described above is disadvantageous in that it is difficult to re-detect the electronic watermark data.

Thus, another method has been proposed wherein an image is frequency converted and electronic watermark data are embedded into a resulting frequency spectrum (Nikkei Electronics, April 22, 1996, No. 660, p.13). In this method, since electronic watermark data are embedded into frequency components, the electronic watermark data are not lost even by image processing such as compression processing or filtering. Further, random numbers which exhibit a normal distribution are adopted as the electronic watermark data in order to prevent interference between electronic watermark data and make it difficult to destroy electronic watermark data without having a significant influence on the entire image.

Another system of decoding a message has been proposed in "INFORMATION HIDING IN TEXT IMAGES RESEARCH DISCLOSURE, GB, INDUSTRIAL OPPORTUNITIES LTD. HAVANT, no. 389, page 539-540. This document dislcloses a system of decoding the presence of an embedded message
in a text with the subsequent look for authorization of copying, whereby

- if the embedded message is not detected, then the reproduction is allowed,
- if the embedded message is detected, then in a subsequent step
- it is looked for authorization, and
- depending on the authorization, the reproduction is
- allowed, or
- not allowed.

In a method of embedding electronic watermark data, an original image D is divided into blocks of 8 pixels x 8 pixels, and electronic watermark data are embedded regarding each block as a processing unit. Also extraction processing of the electronic watermark data is performed in units of a block.

In electronic watermark data embedding processing, data are first set successively as f(1), f(2), ..., f(n) in the ascending order of the frequency component of an AC component in a frequency region after discrete cosine transform (DCT) in MPEG (Moving Picture Experts Group) coding processing is completed, and electronic watermark data w(1), w(2), ..., 2(n) are selected from within a normal distribution whose average is 0 and whose dispersion is 1, and then

$$F(1) = f(1) + \alpha * avg(f(1)) * w(1)$$

is calculated for the individual values of i, where $\alpha$ is a scaling factor, and avg(f(i)) is a partial average which is an average of absolute values of three neighboring points to the point f(i). Then, succeeding processing of MPEG coding processing is performed replacing f(i) with F(i).

Detection of electronic watermark data is performed in accordance with a method described below. In the detection method, an original image is not required, but only it is required that electronic watermark data candidates w(i) (where i = 1, 2, ..., n) be known.

In a frequency region of each block after dequantization of MPEG decompression processing is completed, data are represented as F(1), F(2), ..., F(n) in the ascending order of the frequency component. Average values of absolute values of three neighboring points to each point F(i) are represented as partial averages avg(F(i)), and electronic watermark data W(i) are calculated in accordance with

$$W(1) = F(1)/avg(F(1)).$$

Further, sum totals WF(i) of W(i) for one image are calculated for the individual 1.

Thereafter, making use of an inner product of vectors, a statistical similarity between the electronic watermark data w(i) and the sum totals WF(i) is calculated in accordance with

$$C = WF * w/(WFD * wD)$$

where W = (WF(1), WF(2), ..., WF(n)), w = (w(1), w(2), ..., w(n)), WFD = absolute value of the vector WF, and wD = absolute value of the vector w. When the statistical similarity C has a value higher than a particular value, it is discriminated that the electronic watermark data are embedded.

However, where the method described above is employed, if image data are regarded as a mere single block of digital data on a personal computer, they can be duplicated by a desired number of times using a copy command of operation system software of the Windows, MS-DOS (both trade marks of Microsoft) or the like.

Further, with a system which handles a digital image such as a digital video recorder, a copying machine or a facsimile, since a copy of data can be produced simply, it itself cannot be prevented that digital image data including electronic watermark data are duplicated as they are.

It is an object of the present invention to provide an image data illegal use inhibition system which can prevent illegal use of digital image data without deterioration of the picture quality and allows, even if digital image data are duplicated, identification of the ownership from the duplicate.

In order to attain the object described above, according to an aspect of the present invention, there is provided an image data illegal use inhibition system, comprising image data fetching means for fetching digital image data in which electronic watermark data may be embedded, electronic watermark data detection means for detecting electronic watermark data from the image data fetched by the image data fetching means, and transfer inhibition means for inhibiting, if electronic watermark data are detected by the electronic watermark data detection means, transfer of the image data fetched by the image data fetching means to a transfer destination.

According to another aspect of the present invention, there is provided an image data illegal use inhibition system, comprising image data fetching means for fetching digital image data in which electronic watermark data may be embedded, electronic watermark data detection means for detecting electronic watermark data from the image data fetched by the image data fetching means, and transfer means for transferring, if electronic water mark data are detected by the electronic watermark data detection means, data different from the image data fetched by the image data fetching means to a transfer destination. Preferably, the different data are data obtained by superposing data obtained by multiplying the electronic watermark data by a constant on the image data fetched by the image data fetching means.

According to a further aspect of the present invention, there is provided an image data illegal use inhibition system, comprising image data fetching means for fetching digital image data in which electronic watermark data may be embedded, electronic watermark data detection means for detecting the electronic watermark data from the image data fetched by the image data fetching means, and transfer inhibition means for discriminating whether the detected electronic watermark data indicate transfer permission or inhibition and inhibiting, when the detected electronic water mark data indicate transfer inhibition, a transferring operation of the fetched image data to a transfer destination. Preferably, the transfer inhibition means discriminates, when the detected electronic watermark data include a value representing that the transfer permission time number is zero, that the detected electronic watermark data are electronic watermark data indicating transfer inhibition.

According to a still further aspect of the present invention, there is provided an image data illegal use inhibition system, comprising image data fetching means for fetching digital image data in which electronic watermark data including a value indicating that the transfer permission time number is m may be embedded, watermark data embedding means for embedding, into the fetched image data, new electronic watermark data which includes a value indicating that the transfer permission time number is smaller by one than the preceding value of m, and transfer means for transferring the image data in which the new electronic watermark data are embedded to a transfer destination.

In the image data illegal use inhibition systems, the electronic watermark data may be calculated in accordance with a predetermined expression using frequency components of the digital image data obtained by discrete cosine transform. Otherwise, any of the image data illegal use inhibition system may be constructed such that the image data fetching means fetches digital image data from a recording medium on which the digital image data are recorded, and the transfer destination is a recording medium different from the recording medium on which the digital image data are recorded.

It is to be noted that, in the present specification, the word "transfer" includes transmission of digital image data from a source by or in which the digital image data are produced or stored to another element, storage of such digital image data into or onto another medium, duplication of digital image data from a recording medium in which the digital image data are recorded to another recording medium, duplication of a file by a computer and so forth and should be interpreted widely as any operation which makes digital image data in such a form as allows use of the digital image data.

With the image data illegal use inhibition systems described above, duplication of image data can be prevented without deterioration of the picture quality using an electronic watermark technique. Consequently, the image data illegal use inhibition systems can be applied to various image processing systems.

Further, illegal copying can be prevented without any limitation to a medium of copying source data and to a medium of a copying destination, and even if data are copied illegally, if copyright data are embedded as watermark data in the data, then a person who has the ownership of the image data can be identified by investigating the watermark data and a person who has performed illegal duplication can be specified.

The above and other objects, features and advantages of the present invention will become apparent from the following description and the appended claims, taken in conjunction with the accompanying drawings in which like parts or elements are denoted by like reference characters.

FIG. 1 is a block diagram showing a basic construction of an image data illegal use inhibition system according to the present invention;

FIG. 2 is a block diagram showing an exemplary construction of a watermark data embedding unit shown in FIG. 1;

FIG. 3 is a block diagram showing an exemplary construction of a watermark data detection unit shown in FIG. 1;

FIG. 4 is a block diagram of a digital video system to which the image data illegal use inhibition system of FIG. 1 is applied;

FIG. 5 is a block diagram of a digital copying system to which the image data illegal use inhibition system of FIG. 1 is applied;

FIG. 6 is a block diagram of a form of an image production and recording apparatus shown in FIG. 1 where it is formed as a printer system;

FIG. 7 is a block diagram of a form of an image duplication apparatus shown in FIG. 1 where it is formed as a facsimile system;

FIG. 8 is a block diagram of another form of the image duplication apparatus shown in FIG. 1 where it is formed as a capture board system;

FIG. 9 is a block diagram of a data transfer system to which an image data illegal use inhibition system according to the present invention is applied;

FIG. 10 is a flow chart illustrating operation of the data transfer system of FIG. 9; and

FIG. 11 is a block diagram showing an exemplary construction of a watermark data detection/embedding unit shown in FIG. 9.

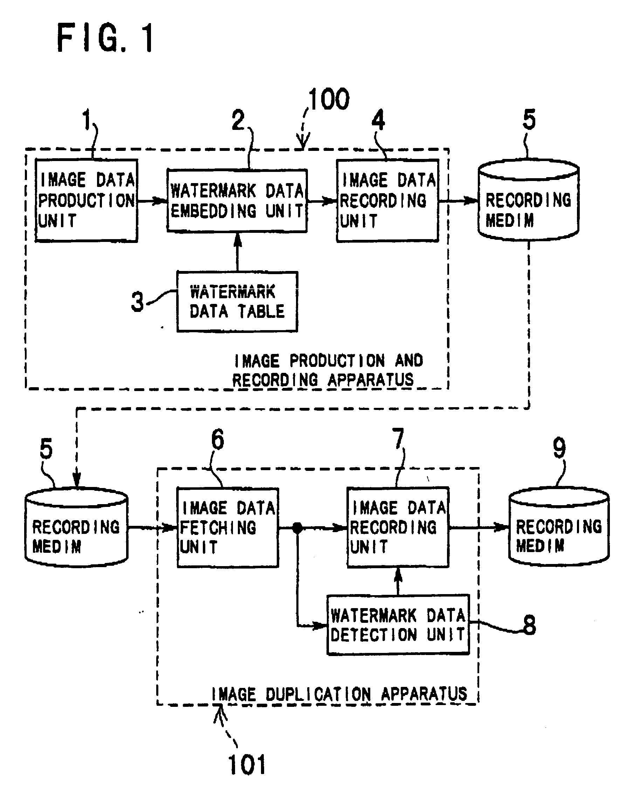

FIG. 1 shows a basic construction of an image data illegal use inhibition system to which the present invention is applied. The image data illegal use inhibition system includes two principal components of an image production and recording apparatus 100 and an image duplication apparatus 101. The image production and recording apparatus 100 is composed of an image data production unit 1, a watermark data embedding unit 2, a watermark data table 3 and an image recording unit 4. Meanwhile, the image duplication apparatus 101 is composed of an image data fetching unit 5, an image data recording unit 7 and a watermark data detection unit 8.

In the image production and recording apparatus 100, digital image data produced by the image data production unit 1 are sent to the watermark data embedding unit 2. The watermark data embedding unit 2 inserts electronic watermark data of the watermark data table 3 into the digital image data in such a manner as hereinafter described. The image data recording unit 4 records the digital image data, in which the electronic watermark data are embedded, onto a recording medium 5.

In the image duplication apparatus 101, the image data fetching unit 6 fetches the digital image data recorded on the recording medium 5. The watermark data detection unit 8 detects the electronic watermark data in the digital image data fetched by the image data fetching unit 6 in such a manner as hereinafter described. The image data recording unit 7 records, if the image data fetching unit 6 does not detect electronic watermark data, the digital image data onto another recording medium 9 to produce a duplicate, but does not perform, if electronic watermark data are detected, recording of the digital image data onto the recording medium 9.

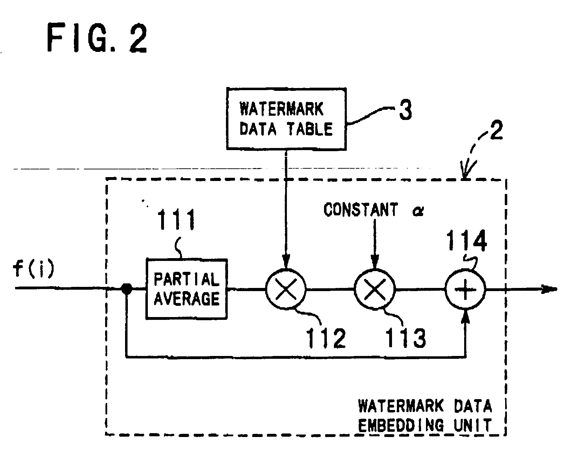

FIG. 2 shows an exemplary construction of the watermark data embedding unit 2. Digital image data from the image data production unit 1 of FIG. 1, that is, discrete cosine transformed MPEG image data, are inputted to a partial average calculation section 111 and an adder 114. The digital image data are represented as $f(i)$ ($i = 1, 2, ..., n$) for the convenience of description.

The partial average calculation section 111 calculates partial averages described hereinabove in accordance with $arg(f(1)) = (|f(i-1)| + |f(i)| + |f(i+1)|)/3$ and supplies a result of the calculation to one of input terminals of a multiplier 112.

To the other input terminal of the multiplier 112, electronic watermark data $w(i)$ are supplied from the watermark data table 3. An output of the multiplier 112 is multiplied by a scaling factor $\alpha$ by a multiplier 113, and a result of the multiplication is added to the digital image data by the adder 114. A result of the addition, that is, image data ($f(i) + \alpha *$ $arg(f(i)) * w(i)$) in which the electronic watermark data are embedded, are obtained from the adder 114 and supplied to the image data recording unit 4 of FIG. 1.

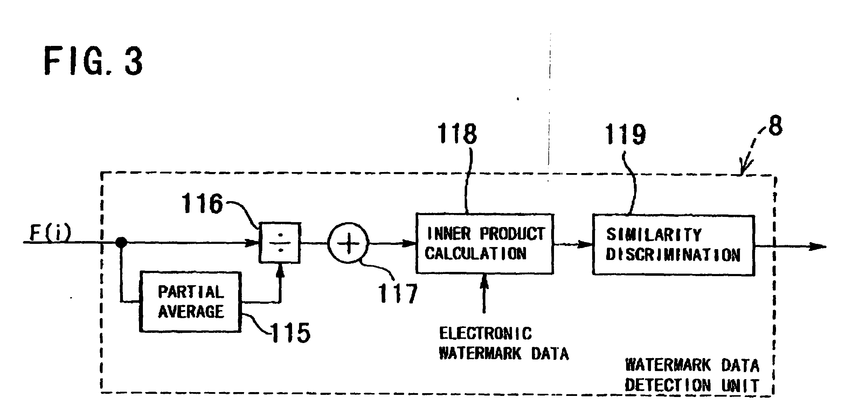

FIG. 3 shows an example of a construction of the watermark data detection unit 8. Data $F(i)$ fetched by the image data fetching unit 6 of FIG. 1 are supplied to a partial average calculation section 115 and a divider 116. The partial average calculation section 115 calculates partial averages $avg(F(i))$ mentioned hereinabove. This calculation is performed, for example, in accordance with $avg(F(i)) = (|F(i-1)| + |F(i)| + |F(i+1)|)/3$. The divider 116 performs calculation of $W(i) = F(i)/avg(F(i))$.

Then, an adder 117 calculates, for the individual values of i, sum totals $WF(i)$ of the thus calculated values $W(i)$ for one image, Then, the sum totals $WF(i)$ are supplied to an inner product calculation section 118, by which inner products thereof with electronic watermark data $w(i)$ of an object of detection are calculated. The calculation of the inner product calculation section 118 is represented in the following manner.

$$C = WF * w/(WFD * wD)$$

where WF is a vector whose elements are $WF(1), WF(2), ..., WF(n)$, w is a vector whose elements are $w(1), w(2), ..., w(n)$, WFD is an absolute value of the vector WF, and wD is an absolute value of the vector w.

The inner product calculation section 118 calculates inner products C for all of possible ones of electronic watermark data and supplies the inner products C to a similarity discrimination section 119.

The similarity discrimination section 119 detects those electronic watermark data which maximize the inner products C, and sends out a result of the detection to the image data recording unit 7 of FIG. 1.

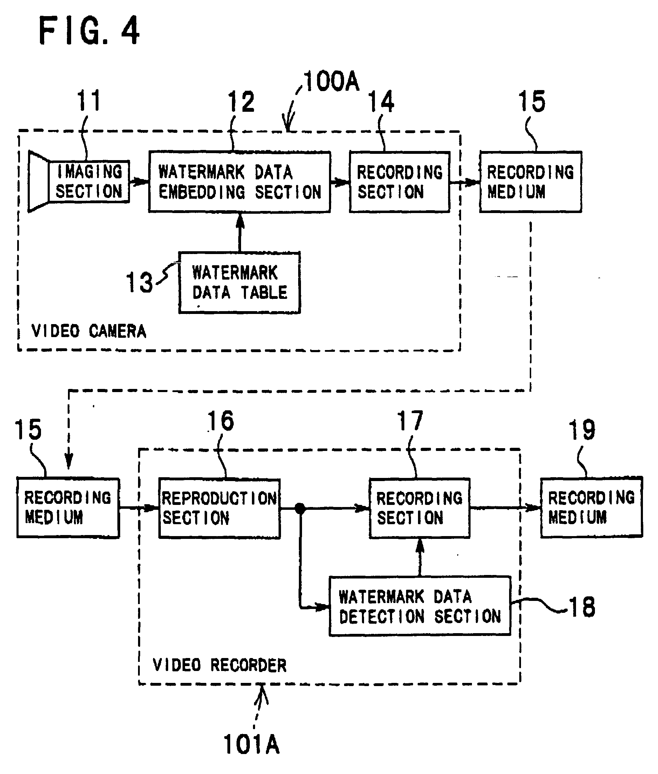

FIG. 4 shows a digital video system to which the image data illegal use inhibition system of FIG. 1 is applied. Referring to FIG. 4, in the digital video system shown, the image production and recording apparatus 100 shown in FIG.

1 is formed as a video camera 100A and the image duplication apparatus 101 is formed as a video recorder 101A.

In the video camera 100A, an image imaged by an imaging section 11 is sent as digital image data to a watermark data embedding section 12. Meanwhile, electronic watermark data to be embedded into digital image data are stored in a watermark data table 13. Thus, the electronic watermark data are read out from the watermark data table 13 and sent to the electronic watermark data embedding section 12. The watermark data embedding section 12 inserts the electronic watermark data into the digital image data sent thereto in such a manner as described above. The digital image data in which the electronic watermark data are inserted are stored onto a recording medium 15 such as a magnetic tape or an optical disk by a recording section 14.

When a duplicate is to be produced, the digital image data stored on the recording medium 15 are reproduced by a reproduction section 16 of the video recorder 101A. Normally, the digital image data are stored onto a recording medium 19 again by a recording section 17 to produce a duplicate. However, if electronic watermark data are inserted in the digital image data reproduced by the reproduction section 16, that is, if electronic watermark data are detected by a watermark data detection section 18, then such detection is reported to the recording section 17. When the detection of electronic watermark data is reported, the recording section 17 does not perform storage of the digital image data onto the recording medium 19, thereby preventing illegal duplication.

Alternatively, when electronic watermark data are detected, dummy data may be supplied to the recording section 17 or data obtained by multiplying the watermark data stored in the watermark data detection section 18 by a constant so that the data may have a maximum magnitude substantially equivalent to the dynamic range of the image data may be added to reproduced image data and sent to the recording section 17. If such data are supplied to the recording section 17, then an image quite different from the original image is outputted from the recording section 17, and consequently, illegal duplication can be prevented even if a duplication operation is not inhibited.

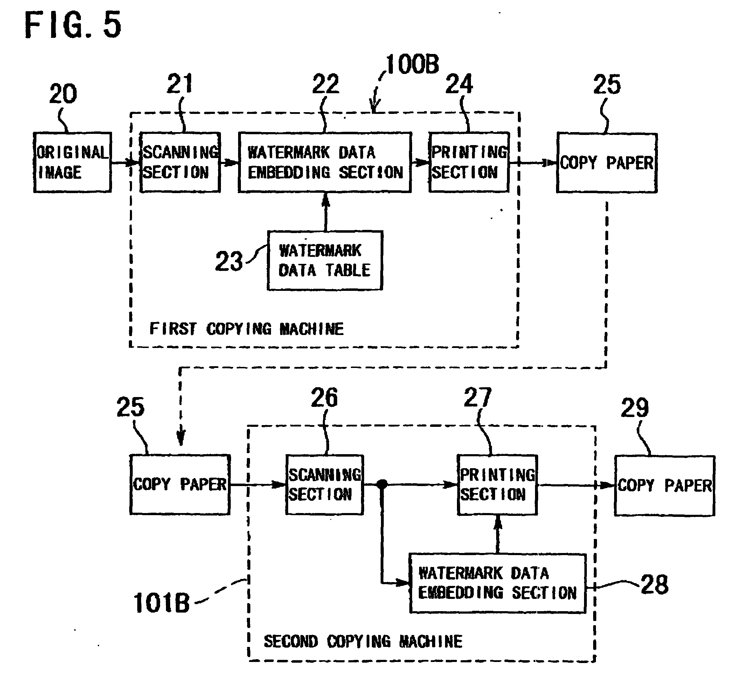

FIG. 5 shows a digital copying system to which the image data illegal use inhibition system shown in FIG. 1 is applied. Referring to FIG. 5, in the digital copying system shown, the image production and recording apparatus 100 shown in FIG. 1 is formed as a first copying machine 100B and the image duplication apparatus 101 is formed as a second copying machine 101B.

An original image 20 fetched by a scanning section 21 of the first copying machine 100B is sent as digital image data to a watermark data embedding section 22. Meanwhile, electronic watermark data to be embedded into digital image data are stored in a watermark data table 23, and they are read out from the watermark data table 23 and sent to the watermark data embedding section 22. The watermark data embedding section 22 inserts the electronic watermark data into the digital image data sent thereto. The digital image data in which the electronic watermark data are inserted are printed on copy paper 25 by a printing section 24.

In the second copying machine 101B, the image printed on the copy paper 25 is fetched and converted back into digital image data by a scanning section 26. Normally, the digital image data are printed on copy paper 29 again by a printing section 27 to produce a duplicate. However, if electronic watermark data are inserted in the digital image data fetched by the scanning section 26, that is, if electronic watermark data are detected by a watermark data detection section 28, then such detection is reported to the printing section 27. The printing section 27 does not perform, when the detection of electronic watermark data is reported, printing of the digital image data onto the copy paper 29, thereby preventing illegal copying.

Alternatively, when the electronic watermark data are detected, dummy data may be supplied to the printing section 27 or data obtained by multiplying the watermark data stored in the watermark data detection section 28 by a constant so that they may have a maximum magnitude substantially equal to the dynamic range of the image data may be added to (superposed on) the reproduced image data and sent to the printing section 27. If such data are supplied to the printing section, then an image quite different from the original image is outputted from the printing section 27. Consequently, illegal copying can be prevented even if a copying operation is not inhibited.

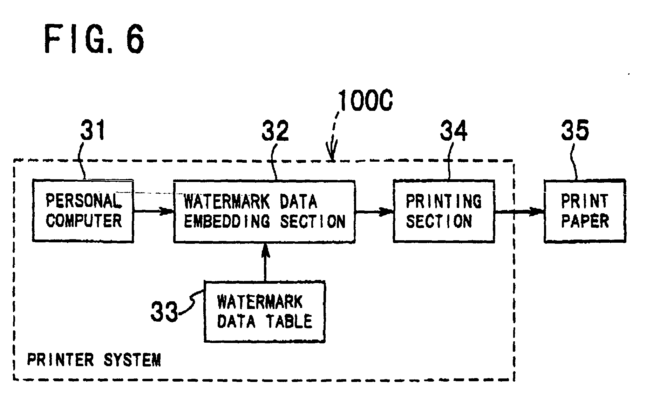

FIG. 6 shows a printer system which makes use of a personal computer. Referring to FIG. 6, the printer system 100C shown operates as the image production and recording apparatus 100 described hereinabove with reference to FIG. 1. In the printer system 100C, electronic watermark data to be embedded into digital image data are stored in a watermark data table 33. A watermark data embedding section 32 inserts the electronic watermark data from the watermark data table 33 into digital image data sent thereto from a personal computer 31 and sends resulting data to a printing section 34. The printing section 34 prints the digital image data, in which the electronic watermark data are inserted, on print paper 35. Consequently, even if it is tried to duplicate the digital image data using, for example, the copying machine 101B of FIG. 5, since the electronic watermark data are detected by the watermark data detection section 28, illegal copying can be prevented.

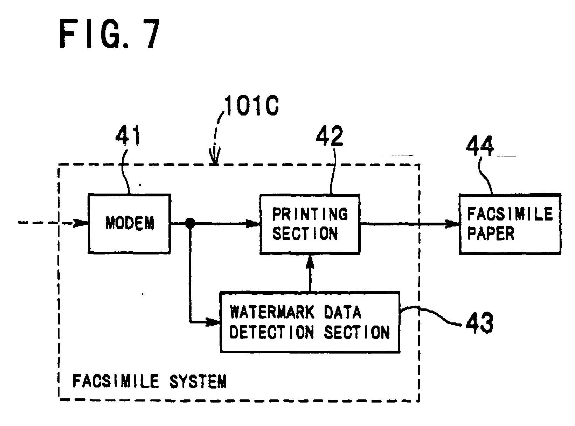

FIG. 7 shows a facsimile system. Referring to FIG. 7, the facsimile system 101C shown operates as the the image duplication apparatus 101 described hereinabove with reference to FIG. 1. In the facsimile system 101C, when image data transmitted through a telephone line are received by a modem 41, the image data are normally sent to a printing section 42, by which they are printed on facsimile paper 44. Where the received image data are digital image representing an image in which electronic watermark data are inserted like an image printed, for example, by the printer system 100C of FIG. 6, it is checked by a watermark data detection section 43 whether or not electronic watermark data are inserted in the digital image data. If electronic watermark data are detected then such detection is reported to the printing section 42. When the detection of electronic watermark data is reported, the printing section 42 does not perform a printing operation, thereby preventing illegal duplication.

Alternatively, if electronic watermark data are detected, then dummy data may be supplied to the printing section 42 or data obtained by multiplying the watermark data stored in the watermark data detection section 43 by a constant so that they may have a maximum magnitude substantially equal to the dynamic range of the image data may be added to (superposed on) the restored image data and sent to the printing section 42. If such data are received by the printing section 42, then an image quite different from the original image is outputted from the printing section 42. Consequently, illegal printing can be prevented even if a printing operation is not inhibited.

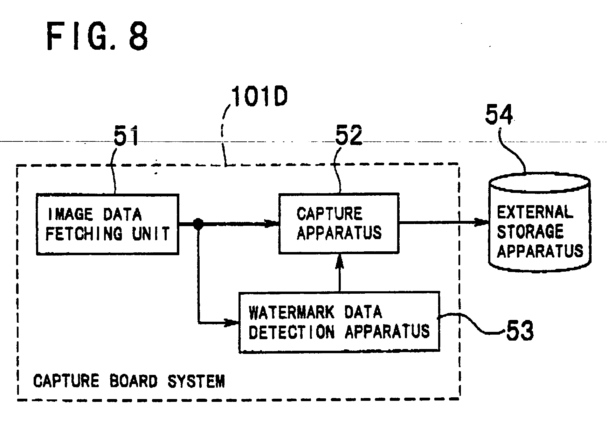

FIG. 8 shows a capture board system. Referring to FIG. 8, the capture board system 101D shown operates as the the image duplication apparatus 101 described hereinabove with reference to FIG. 1. In the capture board system 101D, image data fetched by image data fetching unit 51 are normally sent to a capture apparatus 52, by which they are stored into an external storage apparatus 54. If the image data are digital image data in which electronic watermark data are inserted like an image stored, for example, by the video camera 100A of FIG. 4, then it is checked by an electronic watermark data detection apparatus 53 whether or not electronic watermark data are inserted in the digital image data. If electronic watermark data are detected, then such detection is reported to the capture apparatus 52. The capture apparatus 52 does not perform, when such detection of electronic watermark data is reported, a storing operation of data, thereby preventing illegal duplication.

Alternatively, if electronic watermark data are detected, then dummy data may be supplied to the capture apparatus 52 or data obtained by multiplying the watermark data stored in the watermark data detection apparatus 53 by a constant so that they may have a maximum magnitude substantially equal to the dynamic range of the image data may be added to (superposed on) the restored image data and sent to the capture apparatus 52. If such data are received by the capture apparatus, then an image quite different from the original image is outputted from the capture apparatus 52. Consequently, illegal storage can be prevented even if a storing operation is not inhibited.

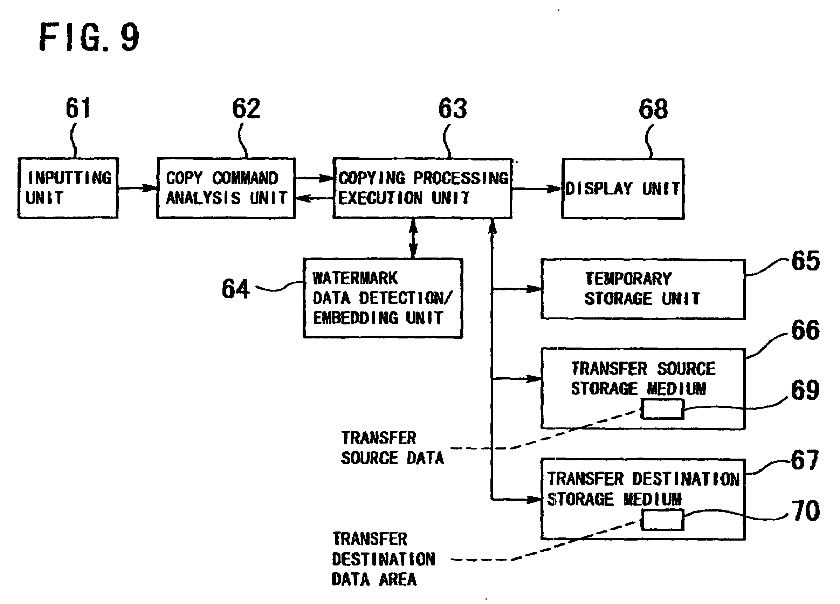

FIG. 9 shows a data transfer system to which an image data illegal use inhibition system according to the present invention is applied. In the data transfer system, data are transferred from a storage unit of a transfer source to a storage unit of a transfer destination so that they may be copied. Referring to FIG. 9, an inputting unit 61 checks whether or not there is a command inputted thereto. If an inputted command is present, then it is analyzed by a copy command analysis unit 62 what the inputted command is. If it is discriminated, as a result of the analysis, that the inputted command is a command to copy transfer source data 69 of a storage medium 66 of a transfer source to a transfer destination data area 70 of a storage medium 67 of a transfer designation, then a command is sent to a copying processing execution unit 63 so that copying processing may be executed. The copying processing execution unit 63 transfers the transfer source data 69 stored in the storage medium 66 of the transfer destination to temporary storage unit 65 and then causes the thus transferred data 69 to be checked by a watermark data detection/embedding unit 64. The watermark data detection/embedding unit 64 detects presence or absence of watermark data in the data 69 and discriminates, if watermark data are detected, which one of permission and inhibition of copying the watermark data indicate.

If a result of detection of watermark data indicates permission of copying, then the transfer source data 69 stored in the temporary storage unit 65 are copied into the transfer destination data area 70 of the storage medium 67. However, if the detected watermark data indicates permission of copying by m times, than dequantized data in which new watermark data are embedded are sent from the watermark data detection/embedding unit 64 to the copying processing execution unit 63 and stored into the transfer destination data area 70 of the storage medium 67 of the transfer destination, and copying is executed. Then, information representing what coping has been performed by the copying processing execution unit 63 is sent to and displayed by display unit 68, thereby ending the copying processing. If the detected watermark data indicate inhibition of copying, then no copying is performed.

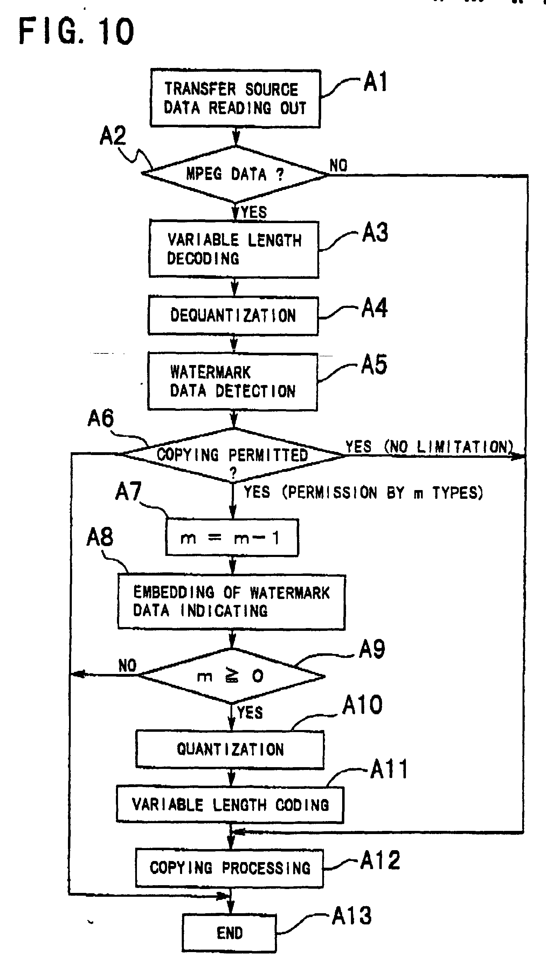

Subsequently, operation of copying processing by the data transfer system of FIG. 9 is described with reference to a flow chart of FIG. 10.

The copying processing execution unit 63 reads out the transfer source data 69 from the storage medium 66 of the transfer source in step A1. In step A2, the transfer source data 69 are inputted to the copy command analysis unit 62, by which a header of MPEG data is analyzed to discriminate whether or not the data are MPEG image data.

If the transfer source data 69 are MPEG image data, then variable length decoding processing for dequantized data is performed in step A3, and the variable length coded data are dequantized in step A4. The dequantized data are supplied to the watermark data detection/embedding unit 64, by which watermark data are detected. In step A6, discrimination of the detected watermark data is performed.

If the watermark data detected in step A5 indicate inhibition of copying, then the control jumps without doing anything to step A13, in which the processing is ended.

If the watermark data detected in step A5 indicate that there is no limitation to the number of times in copying, the control jumps to step A12, in which the transfer source data 69 are copied into the transfer destination data area 70, whereafter the control jumps to step A13, in which the processing is ended.

If the watermark data detected in step A5 indicate permission of copying by m (m = 1 to k) times, m is updated to m = m-1 in step A7. Then, in step A8, watermark data indicating permission of copying by m times are embedded into the data dequantized in step A4.

Then, if m ≥ 0 in step A9, then the data into which the watermark data indicating permission of copying by m times have been embedded in step A8 are quantized in step A10. The quantized data are variable length coded in step A11. The data variable length coded and converted into MPEG image data are inputted in step A12 to the copying processing execution unit 63, by which copying processing of them is performed.

If m < 0 in step A9, then since this signifies that copying is inhibited, the processing is ended.

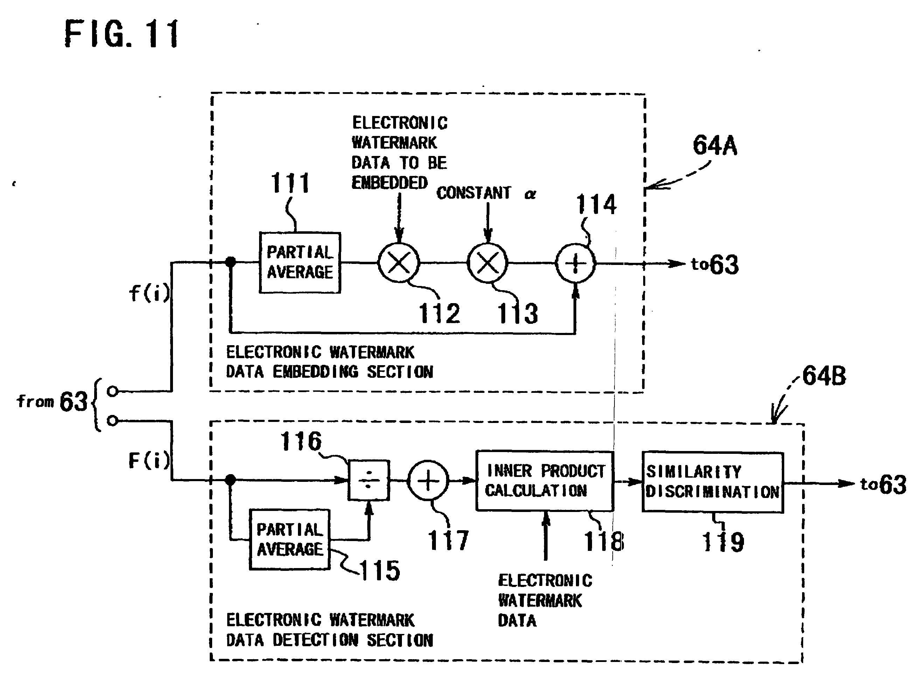

Subsequently, an exemplary construction of the watermark data detection/embedding unit 64 is described with reference to FIG. 11. The watermark data detection/embedding unit 64 is formed from an electronic watermark data embedding section 64A and an electronic watermark data detection section 64B.

The electronic watermark data detection section 64B has a construction same as that of the watermark data detection unit 8 shown in FIG. 3, and the MPEG data F(i) decoded in step A3 of FIG. 10 are supplied to the partial average calculation section 111 and the multiplier 112. The partial average calculation section 111 calculates partial averages avg(F(i)) mentioned hereinabove. The divider 116 performs calculation of W(i) = F(i)/avg(F(i)).

Then, the adder 117 calculates, for the individual i, sum totals WF(i) of the calculated values W(i) for one image. Then, the sum totals WF(i) are supplied to the inner product calculation section 118, by which inner product calculation with the watermark data w(i) is performed.

The inner product calculation section 118 calculates inner products C for all of possible watermark data and supplies the thus calculated inner products C to the similarity discrimination section 119.

The similarity discrimination section 119 detects that watermark data with which the inner product C exhibits a maximum value, and sends out a result of the detection to the copying processing execution unit 63 of FIG. 9.

The electronic watermark data embedding section 64A has a construction same as that of the watermark data embedding unit 2 shown in FIG. 2, and the transfer source data from which the original watermark data have been removed in step A5 of FIG. 10 are inputted to the partial average calculation section 111 and the adder 114.

The partial average calculation section 111 calculates a partial average described hereinabove and supplies a result of the calculation to one of input terminals of the multiplier 112.

To the other input terminal of the multiplier 112, the watermark data w(i) which indicate the value of m determined in step A7 of FIG. 10 are supplied. An output of the multiplier 112 is multiplied by a scaling factor a by the multiplier 113, and a result of the multiplication is added to the digital image data by the adder 114. A result of the addition, that is, image data $(F(i) + \alpha * arg(f(i)) * w(i))$ in which the new watermark data are embedded, are obtained from the adder 114 and supplied to the copying processing execution unit 63 of FIG. 9.

**Claims**

1. An image data illegal use inhibition system comprising
   image data fetching means (6; 16; 26; 41; 51) for fetching digital image data in which electronic watermark data may be embedded;
   electronic watermark data detection means (8; 18; 28; 43; 53) for detecting electronic watermark data from the image data fetched by said image data fetching means (6; 16; 26; 41; 51) **characterized in that** it further comprises transfer means (7; 17; 27; 42; 52) for transferring, if electronic water mark data are detected by said electronic watermark data detection means (8; 18; 28; 43; 53), data different from the image data fetched by said image data fetching means (1; 11; 21; 31; 61) to a transfer destination (9; 19; 29; 44; 54).

2. An image data illegal use inhibition system as set forth in claim 1,
   **characterized in that**
   the different data are data obtained by superposing data obtained by multiplying the electronic watermark data by a constant on the image data fetched by said image data fetching means (6: 16; 26; 41; 51).

3. An image data illegal use inhibition system as set forth in any one of claims 1 to 2, **characterized in that** the electronic watermark data are calculated in accordance with a predetermined expression using frequency components of the digital image data obtained by discrete cosine transform.

4. An image data illegal use inhibition system as set forth in any one of claims 1 to 3, **characterized in that** said image data fetching means (6; 16; 26; 41; 51; 66) fetches digital image data from a recording medium (5; 15; 25; 35; 69) on which the digital image data are recorded, and the transfer destination is a recording medium (9; 19; 29; 44; 54;

70) different from the recording medium (5; 15; 25; 35; 69) on which the digital image data are recorded.

5. An image data illegal use inhibition system as set forth in any one of claims 1 to 4, **characterized in that** said image data illegal use inhibition system is applied to a digital video system and / or a digital copying system and / or a printer system and / or a facsimile system and / or a capture board system and / or a data transfer system.

**Patentansprüche**

1. System zur Unterbindung der illegalen Verwendung von Bilddaten, mit:

Bilddatenerkennungsmitteln (6; 16; 26; 41; 51) zur Erfassung von Bilddaten mit einem elektronischen Wasserzeichen;
Erkennungsmitteln (8; 18; 28; 43; 53) zur Erkennung von elektronischen Wasserzeichen aus den Bilddaten von den Bilddatenerkennungsmitteln (6; 16; 26; 41; 51)

**dadurch gekennzeichnet, dass**
das System außerdem umfasst: Übertragungsmittel (7; 17; 27; 42; 52) zur Übertragung von Daten, die sich von den Bilddaten unterscheiden, die von den Bilddatenerkennungsmitteln (1; 11; 21; 31; 41) erkannt wurden zu einem Bestimmungsort (9; 19; 29; 44; 54), wenn elektronische Wasserzeichen von den Erkennungsmitteln (8; 18; 28; 43; 53) für elektronische Wasserzeichen erkannt werden.

2. System nach Anspruch 1, **dadurch gekennzeichnet, dass** die verschiedenen Daten erhalten werden indem Daten von elektronischen Wasserzeichen mit einer Konstante multipliziert werden und zwar auf den Bilddaten, die von den Bilddatenerkennungsmitteln (6; 16; 26; 41; 51) erkannt werden.

3. System nach Anspruch 1 oder 2, **dadurch gekennzeichnet, dass** die Daten für das elektronische Wasserzeichen berechnet werden, mit einer vorbestimmten Gleichung unter Verwendung von Frequenzkomponenten der digitalen Bilddaten aus einer diskreten Cussinostransformation.

4. System nach Anspruch 1 bis 3 **dadurch gekennzeichnet, dass** die Bilddatenerkennungsmittel (6; 16; 26; 41; 51, 66) die digitalen Bilddaten aus einem Aufzeichnungsmedium (5; 15; 25; 35; 69) holen, auf das die digitalen Bilddaten aufgezeichnet sind, und der Bestimmungsort ein Aufzeichnungsmedium (9; 19; 29; 44; 54; 70) ist, der sich von dem Aufzeichnungsmedium (5; 15; 25; 35; 69) unterscheidet, wo die digitalen Bilddaten aufgezeichnet sind.

5. System nach Anspruch 1 bis 4 **dadurch gekennzeichnet, dass** das System verwendet wird für ein digitales Videosystem und/oder ein digitales Kopiersystem und/oder ein Drucksystem und/oder ein Erfassungssystem und/oder ein Faxsystem und/oder ein Datentransfersystem.

**Revendications**

1. Système d'inhibition de l'utilisation illicite de données d'image, comprenant :

un moyen d'extraction de données d'image (6 ; 16 ; 26 ; 41 ; 51) destiné à extraire des données d'image numériques dans lesquelles des données en filigrane électronique peuvent être incorporées ;
un moyen de détection de données en filigrane électronique (8 ; 18 ; 28 ; 43 ; 53) destiné à détecter des données en filigrane électronique parmi les données d'image extraites par ledit moyen d'extraction de données d'image (6 ; 16 ; 26 ; 41 ; 51), **caractérisé en ce qu'**il comprend en outre :

un moyen de transfert (7 ; 17 ; 27 ; 42 ; 52) destiné à transférer, si des données en filigrane électronique sont détectées par ledit moyen de détection de données en filigrane électronique (8 ; 18 ; 28 ; 43 ; 53), les données étant différentes des données d'image extraites par ledit moyen d'extraction de données d'image (1 ; 11 ; 21 ; 31 ; 61) vers une destination de transfert (9 ; 19 ; 29 ; 44 ; 54).

2. Système d'inhibition de l'utilisation illicite de données d'image selon la revendication 1, **caractérisé en ce que** :

les données différentes sont des données obtenues en superposant les données obtenues en multipliant les données en filigrane électronique par une constante sur les données d'image extraites par ledit moyen d'extraction de données d'image (6 ; 16 ; 26 ; 41 ; 51).

3. Système d'inhibition de l'utilisation illicite de données d'image selon l'une quelconque des revendications 1 et 2, **caractérisé en ce que** les données en filigrane électronique sont calculées selon une expression prédéterminée utilisant des composants de fréquence des données d'image numériques obtenues par transformée en cosinus discrète.

4. Système d'inhibition de l'utilisation illicite de données d'image selon l'une quelconque des revendications 1 à 3, **caractérisé en ce que** ledit moyen d'extraction de données d'image (6 ; 16 ; 26 ; 41 ; 51 ; 66) extrait les données d'image numériques d'un support d'enregistrement (5 ; 15 ; 25 ; 35 ; 69) sur lequel les données d'image numériques sont enregistrées, et la destination de transfert est un support d'enregistrement (9 ; 19 ; 29 ; 44 ; 54 ; 70) différent du support d'enregistrement (5 ; 15 ; 25 ; 35 ; 69) sur lequel les données d'image numériques sont enregistrées.

5. Système d'inhibition de l'utilisation illicite de données d'image selon l'une quelconque des revendications 1 à 4, **caractérisé en ce que**
ledit système d'inhibition de l'utilisation illicite de données d'image est appliqué à un système vidéonumérique et/ou un système de copie numérique et/ou un système d'imprimante et/ou un système de télécopie et/ou un système de capture et/ou un système de transfert de données.

# FIG. 1

# FIG. 2

WATERMARK
DATA TABLE — 3

↙ 2

111

CONSTANT α

114

f(i)

PARTIAL
AVERAGE

⊗         ⊗         ⊕

112    113

WATERMARK DATA
EMBEDDING UNIT

# FIG. 3

F(i) → [116 ÷] → (+) 117 → [INNER PRODUCT CALCULATION 118] → [SIMILARITY DISCRIMINATION 119] →

PARTIAL AVERAGE 115

ELECTRONIC WATERMARK DATA

WATERMARK DATA DETECTION UNIT 8

EP 0 854 633 B1

# FIG. 4

VIDEO CAMERA

100A

11 IMAGING SECTION

12 WATERMARK DATA EMBEDDING SECTION

13 WATERMARK DATA TABLE

14 RECORDING SECTION

15 RECORDING MEDIUM

VIDEO RECORDER

101A

15 RECORDING MEDIUM

16 REPRODUCTION SECTION

17 RECORDING SECTION

18 WATERMARK DATA DETECTION SECTION

19 RECORDING MEDIUM

14

## FIG. 5

FIRST COPYING MACHINE

- 20 — ORIGINAL IMAGE
- 21 — SCANNING SECTION
- 22 — WATERMARK DATA EMBEDDING SECTION
- 23 — WATERMARK DATA TABLE
- 24 — PRINTING SECTION
- 25 — COPY PAPER
- 100B

SECOND COPYING MACHINE

- 25 — COPY PAPER
- 26 — SCANNING SECTION
- 27 — PRINTING SECTION
- 28 — WATERMARK DATA EMBEDDING SECTION
- 29 — COPY PAPER
- 101B

EP 0 854 633 B1

# FIG. 6

100C

31 32 34 35

```
┌─ ─ ─ ─ ─ ─ ─ ─ ─ ─ ─ ─ ─ ─ ─ ─ ─ ─ ─ ─ ─ ─ ─ ┐
│  ┌──────────┐   ┌──────────────┐  ┌─────────┐ │   ┌────────┐
│  │PERSONAL  │→  │WATERMARK DATA│→ │PRINTING │ │ → │PRINT   │
│  │COMPUTER  │   │EMBEDDING SECTION│ │SECTION │ │   │PAPER   │
│  └──────────┘   └──────────────┘  └─────────┘ │   └────────┘
│                      ↑                         │
│              ┌──────────────┐                  │
│        33 ─  │WATERMARK     │                  │
│              │DATA TABLE    │                  │
│              └──────────────┘                  │
│                                                │
│  PRINTER SYSTEM                                │
└─ ─ ─ ─ ─ ─ ─ ─ ─ ─ ─ ─ ─ ─ ─ ─ ─ ─ ─ ─ ─ ─ ─ ┘
```

# FIG. 7

101C

41

42

44

MODEM

PRINTING
SECTION

FACSIMILE
PAPER

WATERMARK DATA
DETECTION SECTION

43

FACSIMILE SYSTEM

# FIG. 8

FIG. 9

61 INPUTTING UNIT

62 COPY COMMAND ANALYSIS UNIT

63 COPYING PROCESSING EXECUTION UNIT

64 WATERMARK DATA DETECTION/EMBEDDING UNIT

68 DISPLAY UNIT

65 TEMPORARY STORAGE UNIT

66 TRANSFER SOURCE STORAGE MEDIUM

69 TRANSFER SOURCE DATA

67 TRANSFER DESTINATION STORAGE MEDIUM

70 TRANSFER DESTINATION DATA AREA

# FIG. 10

TRANSFER SOURCE DATA READING OUT — A1

MPEG DATA ? — A2

NO

YES

VARIABLE LENGTH DECODING — A3

DEQUANTIZATION — A4

WATERMARK DATA DETECTION — A5

COPYING PERMITTED ? — A6

YES (NO LIMITATION)

YES (PERMISSION BY m TYPES)

m = m − 1 — A7

EMBEDDING OF WATERMARK DATA INDICATING — A8

m ≧ 0 — A9

NO

YES

QUANTIZATION — A10

VARIABLE LENGTH CODING — A11

COPYING PROCESSING — A12

END — A13

# FIG. 11

ELECTRONIC WATERMARK DATA TO BE EMBEDDED

CONSTANT $\alpha$

64A

111

112  113

114

f(i)

PARTIAL AVERAGE

to63

ELECTRONIC WATERMARK DATA EMBEDDING SECTION

from 63

64B

F(i)

116

117

INNER PRODUCT CALCULATION

118

SIMILARITY DISCRIMINATION

119

to63

PARTIAL AVERAGE

115

ELECTRONIC WATERMARK DATA

ELECTRONIC WATERMARK DATA DETECTION SECTION

EP 0 854 633 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8069419 A
- JP 5260468 A
- JP 8241403 A

**Non-patent literature cited in the description**

- *Nikkei Electronics,* 22 April 1996, (660), 13
- INFORMATION HIDING IN TEXT IMAGES RESEARCH DISCLOSURE. INDUSTRIAL OPPORTUNITIES LTD, vol. 389, 539-540